# EUROPEAN PATENT APPLICATION

(11) **EP 2 104 309 A1**
(43) Date of publication of application: **23.09.2009**
(21) Application number: 08290266.9
(22) Date of filing: 20.03.2008
(51) Int. Cl.: H04L 29/06, H04L 12/46

(54) **Method for sending or receiving a request for initiating a session**

(71) Applicant: Alcatel Lucent, 75008 Paris (FR)
(72) Inventor: Sienel, Juergen, 71229 Leonberg (DE); Steinbrenner, Michael, 71065 Sindelfingen (DE); Drewniok, Marc, 73728 Esslingen (DE)
(74) Representative: Kohler Schmid Möbus

(57) **Abstract**

A method for sending and/or receiving a session request of a user at an originating domain is proposed, wherein preferably a Session Initiation Protocol (SIP) Message is to be routed from said originating domain over at least one intermediate domain to a recipient at a destination domain of a distributed data network. The Message to be routed, preferably a SIP message is encrypted and included into another preferably SIP message to achieve an inner message in an outer message.

## Description

### Background of the invention

The invention relates to a method for sending and/or receiving a session request, e.g. for initiating a session, meaning a connection for communication, of a user at an originating domain, wherein a, preferably Session Initiation Protocol (SIP), Message is to be routed from said originating domain over at least one intermediate domain to a recipient at a destination domain of a distributed data network, e.g. the internet.

Several solutions for securing the SIP signalling between the providers of the originating domain and the destination domain (peering providers) are known.

The Session Initiation Protocol, as known in the related art, has a plain text message format. It is vulnerable for security attacks or information collecting. Therefore End to End (E2E) encryption has been introduced as well as Transport Layer security between service providers.
In case of indirect peering, meaning if a SIP message has to be routed via a 3^{rd} party, both concepts fail, since the intermediate or transit provider needs access to parts of the information, provided in the SIP header for routing the SIP message. Hence the complete messages cannot be end-to-end encrypted. For end-to-end encryption, a mechanism is needed, which allows to provide just the necessary information to intermediaries and to hide user information for ensuring privacy. It should be possible, to easily involve a third party domain, e.g. for using a provided service, but preferably without revealing all signalling information.

For example in the SIP Request for Comment (RFC) 3261, different security mechanisms are described for securing SIP messages:
Transport layer security (TLS) and IPSec is used on direct links between to Voice Service Providers (VSPs). TLS is based on Transmission Control Protocol (TCP), which is a connection-oriented protocol on the transport layer. Thus it isn't really qualified for SIP, which is intended to use User Datagram Protocol (UDP) for avoiding proxies which must manage these TCP/TLS connections. IPSec secures the Internet Protocol (IP) and hence all above the network layer. This is leading to a problem of IPSec. It must be implemented in the kernel of the operating system. Thus a solution using IPSec cannot be easily adapted to any processing element. Additionally, the technique and functionality of IPSec is very complicated.
Alternatively SIPS Uniform Resource Identifier (URI) scheme is used. The SIPS URI provides hop-by-hop encryption on the complete signalling path using TLS, which implies the same problems as mentioned in case of TLS and IPSec.
Furthermore Secure Multipart Internet Mail Extension (S/MIME) for verifying the authenticity of a SIP message on user behalf is proposed. S/MIME as described in RFC 3261 is intended for the use on the user agent level. This leads especially to a certification problem. A huge amount of users have to be certified. Additionally, end-to-end encryption on user level makes legal interception impossible. Different use cases of S/MIME are described, but just the tunneling encryption mode provides sufficient security. Nevertheless, there are some problems. First of all, the outer header provides not enough privacy. Secondly there are no solutions for intervening operators and third party domains providing services.

### Object of the invention

It is therefore an object of the invention to provide a method for sending and/or receiving a session request, e.g. for initiating a session, which overcomes at least one of the problems associated with the related art, in particular which provides a secured way to exchange SIP messages between providers end-to-end hiding user information for ensuring privacy in an easy and secure way.

### Short description of the invention

This object is achieved, in accordance with the invention, by the method according to the independent claims. Although in the following the description is focused on SIP messages as an example, alternatively to SIP Messages other protocols for initiating a connection for communication can be used for the messages and/or other kinds of session requests can be processed according to the inventive methods.

The inventive method for sending a session request, e.g. for initiating a session, i.e. a connection for communication, of a user at an originating domain, wherein a, preferably Session Initiation Protocol, Message is to be routed from said originating domain over at least one intermediate domain to a recipient at a destination domain of a distributed data network, e.g. the internet, is comprising the steps of:
a) creating a plaintext inner Session Initiation Protocol Message of said session comprising at least one user data field containing data characterizing said user and a recipient data field containing data characterizing said recipient by a provider of the originating domain;
b) encrypting at least parts, preferably at least said data characterizing said recipient, of said inner Session Initiation Protocol Message, or the whole inner Session Initiation Protocol Message, by the provider of the originating domain;
c) creating an anonymous outer Session Initiation Protocol Message for said session by the provider of the originating domain, comprising said encrypted parts of said inner Session Initiation Protocol Message or the whole encrypted inner Session Initiation Protocol Message in an encryption data field and a destination address data field containing an address of the destination domain and at least one user data field, wherein all data contained in said user data fields is anonymised, meaning that said data contained in said user data fields comprising information characterising the user at the originating domain and/or the recipient is cancelled or modified in a way that it is not characterising the user at the originating domain and/or the recipient anymore; and
d) passing said anonymous outer Session Initiation Protocol Message to a first of said intermediate domains to be routed to said destination domain.

The inventive method for receiving a request for initiating a session between a user at an originating domain and a recipient at a destination domain of a distributed data network, e.g. the internet, by a provider of said destination domain, wherein a, preferably Session Initiation Protocol, Message was routed from said originating domain over at least one intermediate domain to said destination domain preferably is used to receive a request for initiating a session sent as an anonymised Session Initiation Protocol Message according to the inventive method of claim 1. The inventive method for receiving a request is comprising the steps of:
a) receiving said Session Initiation Protocol Message from one of said intermediate domains by said provider of said destination domain;
b) decrypting data contained in an encryption data field of said received Session Initiation Protocol Message and creating a plaintext Session Initiation Protocol Message of said session comprising at least one user data field comprising data characterizing said user and a recipient data field comprising data characterizing said recipient by said provider of said destination domain, wherein said data characterizing said user and said recipient is derived from said decrypted data; and
d) passing said plaintext Session Initiation Protocol Message to said recipient.

In short terms the inventive method proposes to use an encrypting method, e.g. S/MIME, on operator level, and hiding not-relevant information for intermediate nodes.
Although the following is described as S/MIME messages, it will work also with other embedding encryption technologies, e.g. Pretty good Privacy (PGP).

Therefore a S/MIME enhancement of hidden transmission of a SIP message (SIP tunneling) first on operator level and with different parts coded for originating domain, any intermediate domain and destination domain is used. Prefarably a complete SIP message is surrounded by another SIP header (visible header) to achieve an inner message in an outer message. In addition, the inner original message is encrypted and signed using "multipart/signed" S/MIME message with "application/pkcs7-signature" for signing and "application/pkcs7-mime" with smime-type "enveloped-data" for encrypting the original message. The outer message is the part that can be seen by an intermediate operator. Additionally, the visible header is anonymised, i.e. originating sender, e.g. the name "ALICE", and recipient, e.g. the name "BOB", is substituted by "anom1" and "anom2". Therefore all information which aren't necessary for routing are omitted. As this concept works on the domain level, also the usernames and displaynames of the addresses can be made anonymous. The recipient domain will receive the anonymised message and is able to recover the original information from the recipient specific MIME part encoded, e.g. with the public key of the recipient. Instead of having the full message in the inner part, one could only have replacements rules that have to be applied to the outer message to recover the original message.

Hence it is possible to forward a message from the originating to the terminating VSP in a secure, anonymous and transparent way. SIP Peering is anonymised and secured.

Furthermore the following advantages are achieved by the inventive method:
- The invention provides a secured way to exchange SIP messages between providers end-to-end. Because it relies just on the domain layer, the disadvantage of having many certificates is not given here. Within the concept it is possible to hide and enable information selectively. Therefore the header is made anonymous, the original information is transported in an encrypted body as the inner message. Also the original header and body, e.g. Session Description Protocol (SDP), could be separated and made accessible for different recipients.
- Additionally the inventive method is completely transparent for the users. They don't recognize that there is a security mechanism working in the background. This makes the use of VoIP not more complicated for users.
- Only very little more expense is to be raised for encrypting the inner message. No significant delays in the signaling process and only a view more processing needs, meaning more computing power, are to be expected.
- One or more trustable certification authorities, which certify the providers and domains, can secure the method.

### Preferred variants of the invention

A particularly preferred variant of the inventive method for sending a request for initiating a session is characterized in that in step b) said inner Session Initiation Protocol Message is processed to an enveloped S/MIME entity and said S/MIME entity is encrypted using a public key of the provider of the destination domain and a signature is calculated for said encrypted enveloped S/MIME entity using a private key of said originating domain and said signature is inserted into a signature data field of said anonymous outer Session Initiation Protocol Message. By using S/MIME a common encrypting technology is used for implementing the inventive method.

If data characterizing a type of said inner Session Initiation Protocol Message is inserted into a content type data field of said anonymous outer Session Initiation Protocol Message, different types of SIP Messages can be treated in appropriate different ways. E.g. a request or a response can be distinguished from each other.

A particularly preferred variant of the inventive method for receiving a request for initiating a session is characterized in that in step b) of the receiving method said decrypting is comprising the steps of: b1) checking a signature contained in a signature data field of said received Session Initiation Protocol Message by using a public key of said provider of said originating domain; and b2) if the signature is correct decrypting said data contained in said encryption data field of said received Session Initiation Protocol Message using a private key of said provider of said destination domain.
Therefore a double security mechanism is achieved as it is common in S/MIME technology.

Advantageously in the inventive method for receiving a request for initiating a session before decrypting said data contained in said encryption data field data characterizing a type of said plaintext Session Initiation Protocol Message to be created is read out of a content type data field of said received Session Initiation Protocol Message by said provider of said destination domain and said creating is carried out according to said type of said plaintext Session Initiation Protocol Message. Therefore different types of encrypted SIP Messages can be treated in appropriate different ways.

Also within the scope of the invention is a computer program comprising means for performing at least one of the inventive methods when run and/or stored on a computer system.

Further advantages can be extracted from the description. The features mentioned above and below can be used in accordance with the invention either individually or collectively in any combination. The embodiments mentioned are not to be understood as exhaustive enumeration but rather have exemplary character for the description of the invention.

### Detailed description of the invention

For sending a Message according to the inventive method, when a VSP needs to send a secured SIP message, it secures the message for forwarding according to the following rules:
It creates a new S/MIME secured SIP message with the Content-Type "multipart/signed" for carrying a tunneled and authenticated SIP message. The complete received plaintext message is processed to an enveloped S/MIME entity, which is encrypted with the public key of the designated receiving VSP. This entity is attached to the first content part of the "multipart/signed" body. For this part a signature is calculated using the private key of the sending VSP, which is inserted into the second content part. The inner MIME headers of the two content parts are to be set according to MIME standards. Additionally the MIME header "Content-Description" is to be inserted. This field contains for the enveloped data the name of the destination provider, with which public key the content was encrypted. For the signed data, the name of the sending provider, which signed the message, is inserted. So it is easy possible for a receiving provider to detect, whether the content is encrypted for him and which public key it has to use to check the signature. The resulting parts are the properties of the new "multipart/signed" message. Both parts are shown below.

First, the enveloped content part:

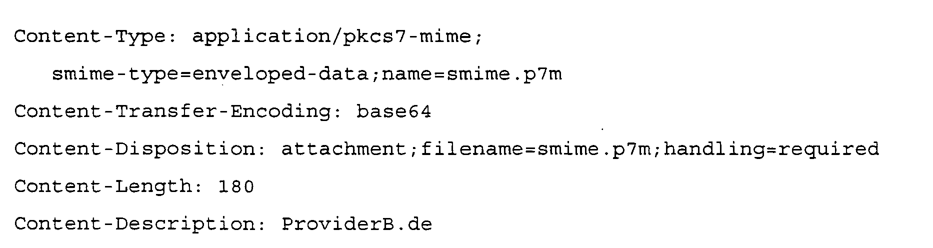

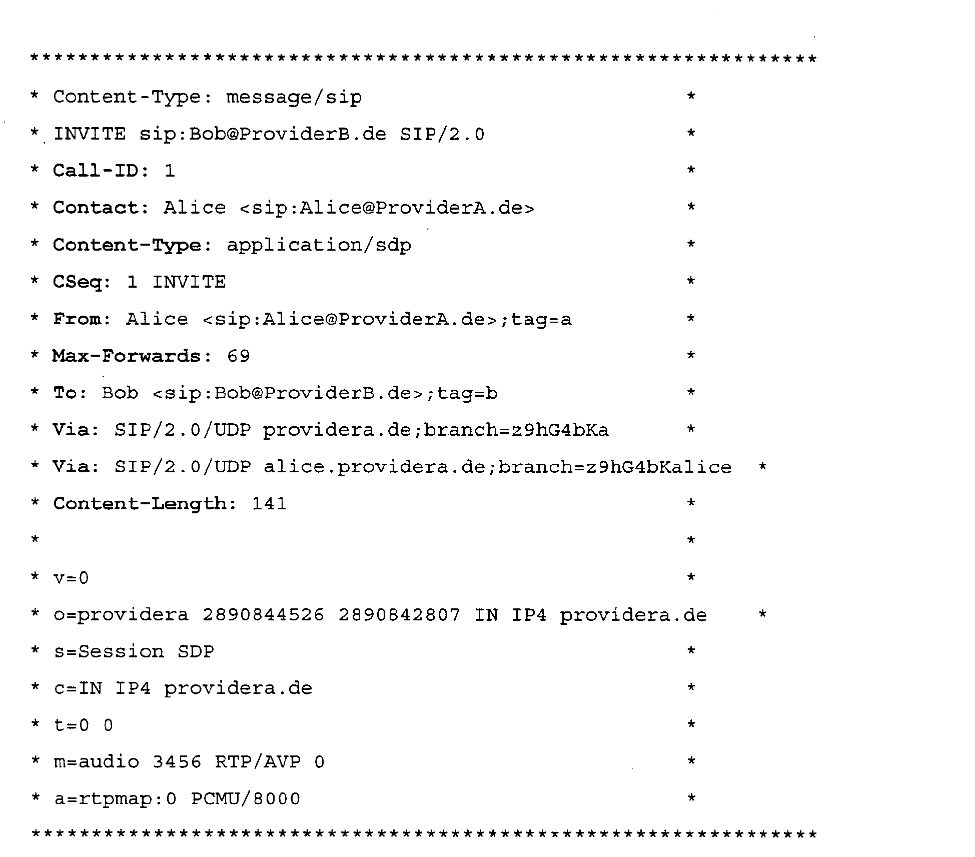

Second, the content part which carries the signature:

```
 Content-Type: application/pkcs7-signature;name=smime.p7s
 Content-Transfer-Encoding: base64
 Content-Disposition: attachment;filename=smime.p7s;handling=required
 Content-Description: ProviderA.de
 ghyHhHUujhJhjH77n8HHGTrfvbnj756tbB9HG4VQpfyF467GhIGfHfYT6
 4VQpfyF467GhIGfHfYT6jH77n8HHGghyHhHUujhJh756tbB9HGTrfvbnj
```

Both content parts are merged to a "multipart/signed" body and segmented through a random delimiter, which is declared in the "boundary" parameter in the outer Content-Type.

The original header is resumed for the outer message, but some values are omitted or changed for an anonymous header. Headers which aren't necessary for the intermediaries and for routing must be omitted, especially the headers which reveal information about the client and its identity. But SIP defines some headers, which must be present in a message. If the message is a request, these are "Call-ID", "Contact", "Cseq", "From", "Max-Forwards", "To" and "Via". Every tunneled message must contain "Content-Length" and "Content-Type" in the outer header, because it contains always a body. Additional headers, which are preferably used in the provider interconnection scenario for ensuring the correct path for the signaling, are "Record-Route" and "Route". Depending whether it is a request or response, one of them must also be present in the outer header. Some of the mentioned headers contain addresses of the originating and terminating user. Because the security concept is intended for inter-provider routing, just the domain names are needed in the visible header to ensure routing functionality. Request for Comment (RFC) 3323 makes some proposals how to create a private SIP messages, especially how to create anonymous SIP URIs and display names. In this case, the display name and the SIP username are set to "anonymous". The hostname must be present for routing the message. But this shouldn't be a privacy gap, because it is to assume that VSPs are well-known and the information about the exchange between these VSPs is not interesting for someone. Also the Request URI has to be handled like this. The real and correct addresses are carried in the original message in the enveloped part.
This is an example for an anonymous address entry:

```
 From: Anonymous <sip:anonymous@providera.de>
```

If all these things are obeyed, the resulting tunnelled and anonymous SIP message looks like this:

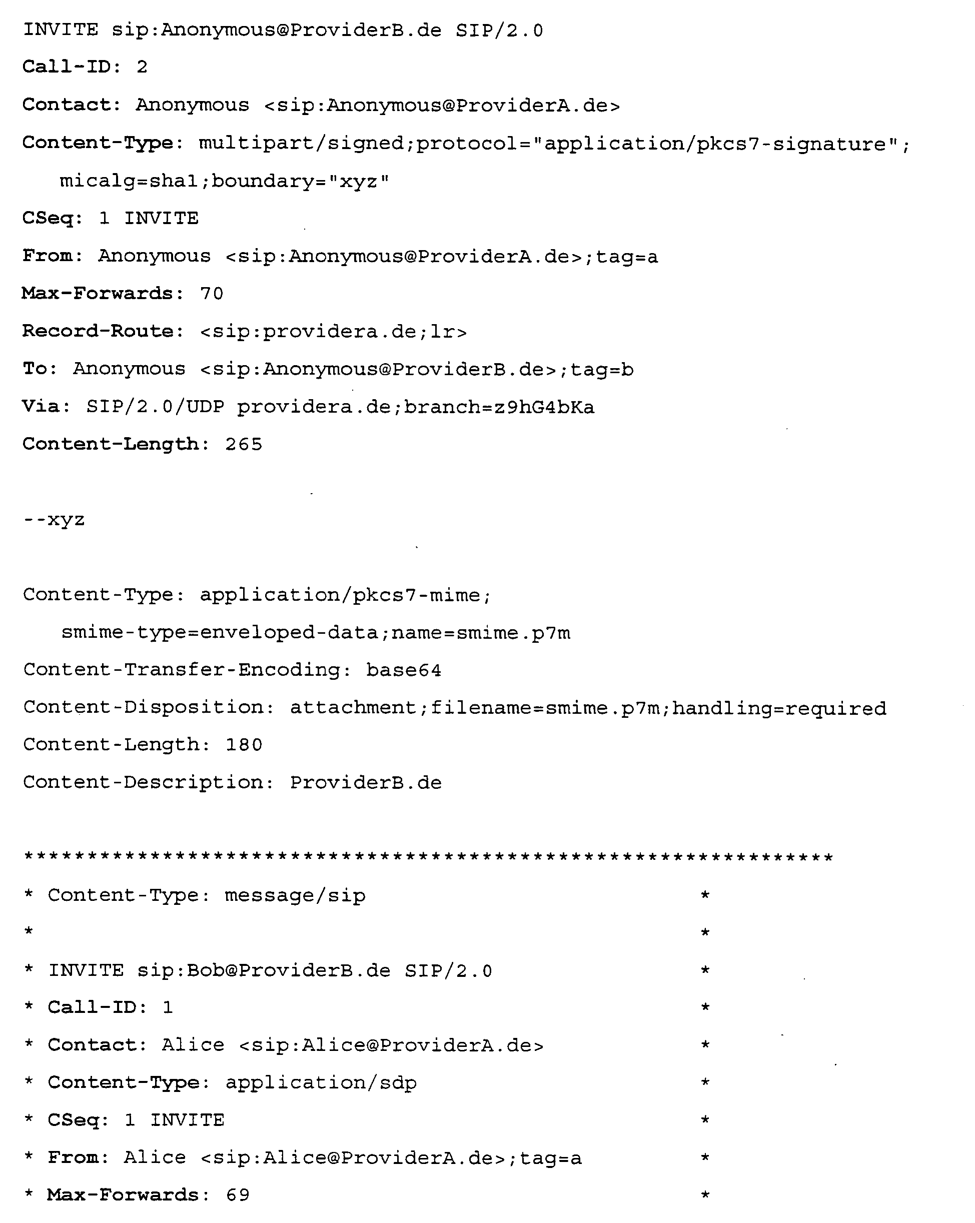

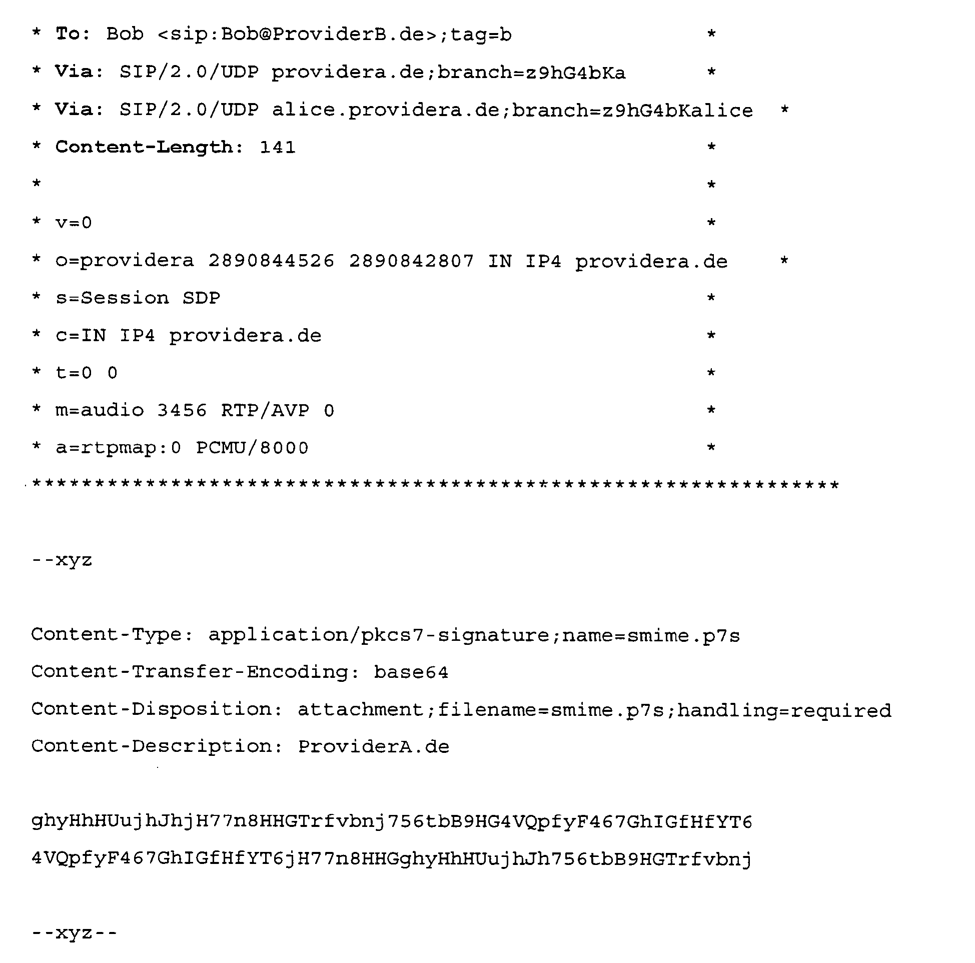

This is the procedure for forwarding plaintext messages, which are received from one of the VSPs clients.

It is possible, that the call cannot be established, because the destination user agent cannot handle the same media codes. In this case, mostly a third domain has to intervene for providing media transcoding. Once the sending provider notices this, it has to involve the transcoder into the security mechanism. But for media transcoding services, it isn't necessary, that this intermediary has access to the complete SIP message. It would be enough to grant access just to the SDP body of the original messages. To achieve this, the sending provider must separate the original SIP header and SDP body. The SIP header must be encrypted for the receiving provider and the SDP body must be encrypted for the service intermediary. Both are signed from the sending provider. Thus the sending provider has two "multipart/signed" messages for two different destinations, which should be sent in one SIP message. Therefore it uses the "multipart/mixed" mechanism of MIME to attach both secured parts.

The complete "multipart/mixed" message is shown here:

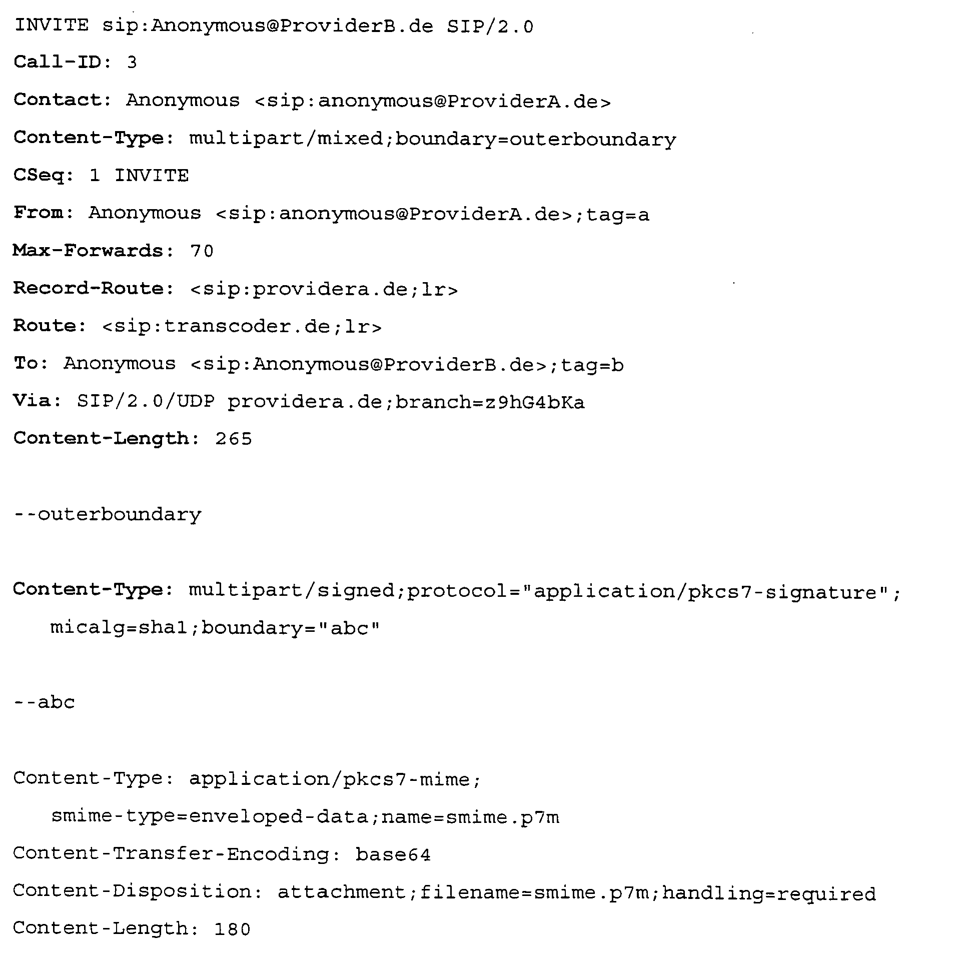

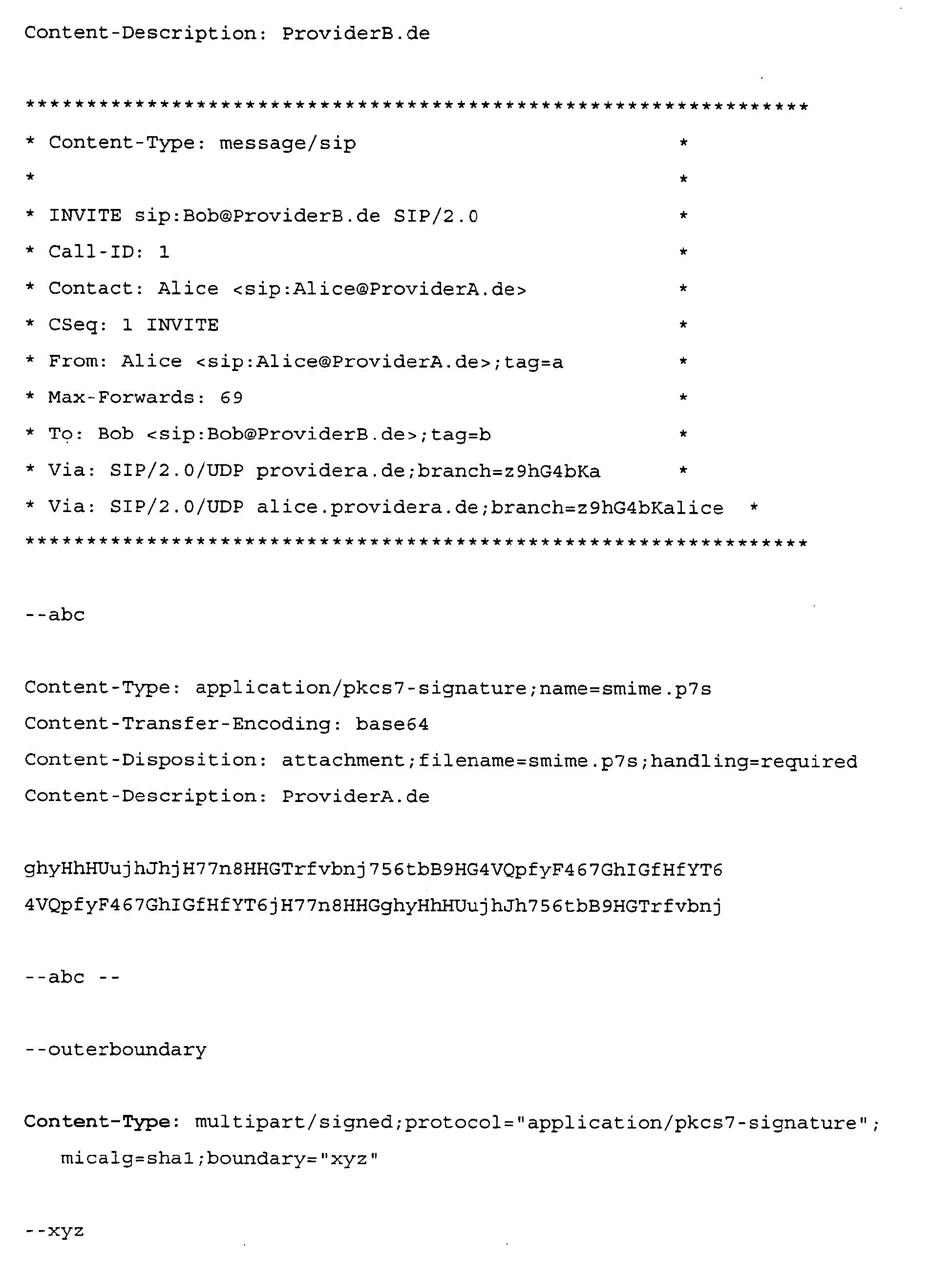

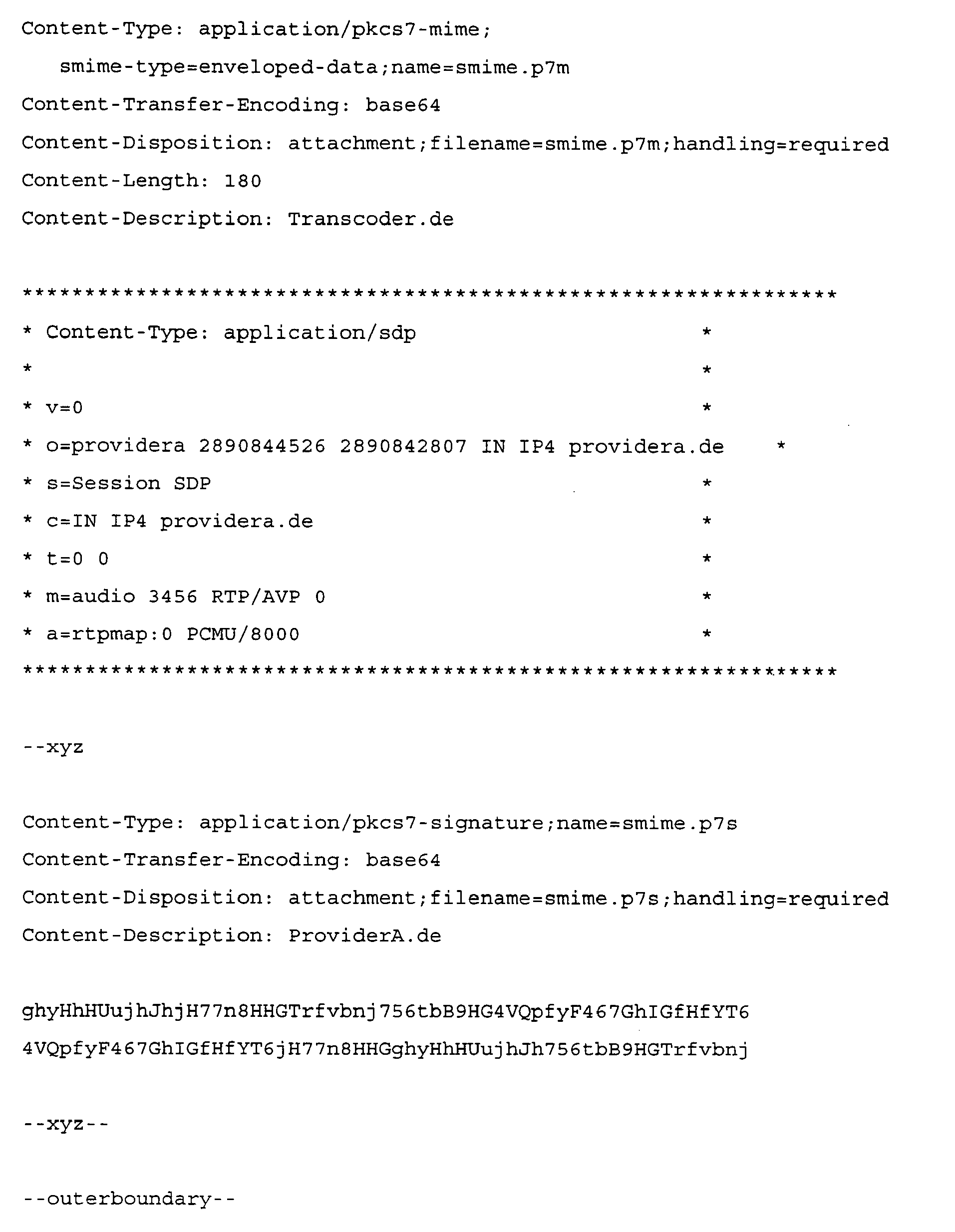

Whether an intermediary must be involved for providing services and whether a standard "multipart/signed" or a "multipart/mixed" message with separated parts is to be sent therefore, must be decided by the sending provider in context of the exchanged messages in the session.

For receiving a message according to the invention, if a provider receives a secured S/MIME message from one of the other providers which is addressed for it, it has to detect the Content-Type of the secured message. It discovers whether the enveloped part of a "multipart/signed" message or one or both of the enveloped parts of the two "multipart/signed" contents in a "multipart/mixed" message are encrypted for it. If both "multipart/signed" parts of "multipart/mixed" are intended for it, it must process both parts the same way as it processes a single "multipart/signed" content.
Then it must check the signature with the public key of the provider, named in the Content-Description field of the signature content part. If the signature is correct, it decrypts the enveloped data with its private key. The result is the plaintext message which was sent by the other user agent. Either it forwards this plaintext message to the addressed user agent or the provider logic generates a reply message dependent on the scenario.
With the exception of just a few scenarios, an important mechanism is the inversion of encryption and signing. If the receiving provider sends a reply, the enveloped part is to encrypt with the public key of the provider which signed the received message. As the sending provider it must sign the message with its private key. This is also an inversion considering the enveloped part of the received message was encrypted for this provider.
The users which receive a plaintext message don't recognize that a security mechanism is established on the path between their provider and the destination provider. Because the original message is completely tunneled and just the originating and terminating VSPs has access to it, it seems for the user like a path with no intermediaries.

Intermediaries are domains or providers on the signaling path, which aren't addressed as the destination. Those Intermediaries just have to proxy received messages towards their destination. For this processing, an intermediary has to handle the message as a standard SIP message with arbitrary content. It has neither access to the encrypted original message nor it could discover any private information from the originating or terminating user. Just the information in the outer visible header is accessible for those intermediaries. But this is just information necessary for routing the message on provider level. It is crucial, that intermediaries don't change the content of a secured SIP message in order to retain correct encrypted parts and unchanged signatures.

A method for sending and/or receiving a session request of a user at an originating domain is proposed, wherein preferably a Session Initiation Protocol (SIP) Message is to be routed from said originating domain over at least one intermediate domain to a recipient at a destination domain of a distributed data network. The Message to be routed, preferably a SIP message is encrypted and included into another preferably SIP message to achieve an inner message in an outer message.

## Claims

1. A method for sending a session request of a user at an originating domain, wherein a Message is to be routed from said originating domain over at least one intermediate domain to a recipient at a destination domain of a distributed data network, comprising the steps of:
a) creating a plaintext inner Message of said session request comprising at least one user data field containing data characterizing said user and a recipient data field containing data characterizing said recipient by a provider of the originating domain;
b) encrypting at least parts of said inner Message, or the whole inner Message, by the provider of the originating domain;
c) creating an anonymous outer Message for said session by the provider of the originating domain, comprising said encrypted parts of said inner Message or the whole encrypted inner Message in an encryption data field and a destination address data field containing an address of the destination domain and at least one user data field, wherein all data contained in said user data fields is anonymised;
d) passing said anonymous outer Message to a first of said intermediate domains to be routed to said destination domain.

2. The method according to claim 1, **characterised in that** the session request is a request for initiating a session, preferably wherein the Message to be routed is a Session Initiation Protocol Message and/or the outer Message is a Session Initiation Protocol Message.

3. The method according to claim 2, **characterised in that** in step b) said inner Message is processed to an enveloped S/MIME entity and said S/MIME entity is encrypted using a public key of the provider of the destination domain and a signature is calculated for said encrypted enveloped S/MIME entity using a private key of said originating domain and said signature is inserted into a signature data field of said anonymous outer Message.

4. The method according to claim 1, **characterised in that** data characterizing a type of said inner Message is inserted into a content type data field of said anonymous outer Message.

5. A method for receiving a session request from a user at an originating domain by a recipient at a destination domain of a distributed data network by a provider of said destination domain, wherein a Message was routed from said originating domain over at least one intermediate domain to said destination domain, comprising the steps of:
a) receiving said Message from one of said intermediate domains by said provider of said destination domain;
b) decrypting data contained in an encryption data field of said received Message and creating a plaintext Message of said session request comprising at least one user data field comprising data characterizing said user and a recipient data field comprising data characterizing said recipient by said provider of said destination domain, wherein said data characterizing said user and said recipient is derived from said decrypted data;
d) passing said plaintext Message to said recipient.

6. The method according to claim 5, **characterised in that** said session request is a request for initiating a session between said user at the originating domain and said recipient, preferably wherein the Message which was routed is a Session Initiation Protocol Message and/or said plaintext Message is a Session Initiation Protocol Message.

7. The method according to claim 5, **characterised in that** in step b) said decrypting is comprising the steps of: b1) checking a signature contained in a signature data field of said received Message by using a public key of said provider of said originating domain; and b2) if the signature is correct decrypting said data contained in said encryption data field of said received Message using a private key of said provider of said destination domain.

8. The method according to claim 5, **characterised in that** before decrypting said data contained in said encryption data field data characterizing a type of said plaintext Message to be created is read out of a content type data field of said received Message by said provider of said destination domain and said creating is carried out according to said type of said plaintext Message.

9. Computer program comprising means for performing the method of one of the claims 1 to 8 when run and/or stored on a computer system.
